(19) Europäisches Patentamt
European Patent Office
Office européen des brevets

(11) **EP 4 708 073 A1**

(12) **EUROPEAN PATENT APPLICATION**
published in accordance with Art. 153(4) EPC

(43) Date of publication:
**11.03.2026 Bulletin 2026/11**

(21) Application number: **24848356.2**

(22) Date of filing: **01.08.2024**

(51) International Patent Classification (IPC):
**G06F 16/332** (2025.01)      **G06N 3/08** (2023.01)

(86) International application number:
**PCT/CN2024/109259**

(87) International publication number:
**WO 2025/026402 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.08.2023   CN 202310975117**

(71) Applicant: **Jingdong Technology Information Technology Co., Ltd.**
**Beijing 100176 (CN)**

(72) Inventors:
• LIU, Ruixue
  Beijing 100176 (CN)
• ZHU, Tiangang
  Beijing 100176 (CN)
• CHEN, Meng
  Beijing 100176 (CN)

(74) Representative: **Böckmann genannt Dallmeyer, Georg Nikolas**
**Haldenstrasse 49b**
**8142 Uitikon Waldegg (Zürich) (CH)**

(54) **QUESTION ANSWERING METHOD AND APPARATUS, ELECTRONIC DEVICE AND STORAGE MEDIUM**

(57)     A question answering method and apparatus, an electronic device and a storage medium. The method comprises: acquiring a first modal feature and a second modal feature corresponding to each piece of first modal information among multi-modal information (S110); for one piece of the first modal information, respectively carrying out semantic similarity matching on the first modal feature and a user question feature and on the second modal feature and the user question feature to correspondingly obtain a first similarity vector representation and a second similarity vector representation (S120); carrying out information fusion on the first similarity vector representation and the second similarity vector representation to obtain a multi-modal similarity score (S130); and in response to one of the multi-modal similarity scores being greater than or equal to a preset threshold, determining corresponding first modal information to be an answer (S140). The method can solve the problem in the related art of low answering accuracy caused by neglecting other modal information in a document.

FIG 1

**Description**

CROSS-REFERENCE TO RELATED APPLICATIONS

This application claims the priority to Chinese Patent Application No. 202310975117.0, filed on August 3, 2023 and entitled "QUESTION ANSWERING METHOD AND APPRATUS, ELECTRONIC DEVICE AND STORAGE MEDIUM", the content of which is hereby incorporated by reference in its entirety.

TECHNICAL FIELD

The present disclosure relates to the technical field of information processing, and in particular, to a question answering method and apparatus, an electronic device, and a storage medium.

BACKGROUND

Document Question Answering (DocQA) is a very important technology that can extract answers from unstructured document information. Currently, most DocQA technologies rely on deep neural networks to carry out semantic matching on document content to determine an answer, neglecting other modal information in the document content and thereby leading to low answering accuracy.

It should be noted that the information disclosed in the above background art is intended only to enhance understanding of the background of the present disclosure, and thus may include information that does not constitute prior art known to those of ordinary skill in the art.

SUMMARY

According to a first aspect of the present disclosure, a question answering method is provided, comprising: acquiring a first modal feature and a second modal feature corresponding to each piece of first modal information among multi-modal information; for one piece of first modal information, respectively carrying out semantic similarity matching on the first modal feature and a user question feature and on the second modal feature and the user question feature to correspondingly obtain a first similarity vector representation and a second similarity vector representation; carrying out information fusion on the first similarity vector representation and the second similarity vector representation to obtain a multi-modal similarity score; and in response to one of the multi-modal similarity scores being greater than or equal to a preset threshold, using corresponding first modal information as an answer to answer the question.

Optionally, carrying out semantic similarity matching on the first modal feature and the user question feature comprises: carrying out semantic similarity matching on the first modal feature and the user question feature through a multi-layer attention layer; carrying out nonlinear activation and linear transformation on an output of the multi-layer attention layer through a feedforward network layer to obtain the first similarity vector representation.

Optionally, carrying out semantic similarity matching on the first modal feature and the user question feature through the multi-layer attention layer comprises: for each attention layer, carrying out first linear processing on the user question feature to obtain a first intermediate vector; respectively carrying out second linear processing and third linear processing on the first modal feature to obtain a second intermediate vector and a third intermediate vector; determining a similarity between the first intermediate vector and the second intermediate vector; carrying out weighted matching on the third intermediate vector based on the similarity to obtain an output of the current attention layer; carrying out vector concatenation on the output of each attention layer, and carrying out full connection processing on the concatenated vector through a first fully connected layer to obtain the output of the multi-layer attention layer.

Optionally, carrying out semantic similarity matching on the second modal feature and the user question feature comprises: concatenating the second modal feature and the user question feature to obtain a concatenated vector; and mapping the concatenated vector to a low-dimensional space through a second fully connected layer to obtain the second similarity vector representation.

Optionally, carrying out information fusion on the first similarity vector representation and the second similarity vector representation comprises: carrying out information fusion on the first similarity vector representation and the second similarity vector representation through a gated network; and carrying out full connection processing and nonlinear activation processing on a fused vector to obtain a multi-modal similarity score.

Optionally, the first modal information includes image information, and the second modal feature includes a text feature. Acquiring the second modal feature corresponding to each piece of the first modal information comprises: extracting title information of one piece of the image information; identifying content and attribute information in the image information through a pre-trained target detection model; extracting candidate text information from the image information through optical character recognition; and carrying out vectorization representation on the title information, the content and the content attribute information, as well as the candidate text information to obtain the text feature corresponding to the image information.

Optionally, acquiring the first modal feature corresponding to each piece of the first modal information comprises: extracting image vector information from each piece of first modal information through a image pre-trained model to obtain the corresponding first modal feature.

Optionally, the method further comprises: in response to receiving a user question statement, encoding the user question statement through a pre-trained encoding model to obtain the user question feature.

Optionally, the multi-modal information includes second modal information, and the method further comprises: in response to each multi-modal similarity score being less than a preset threshold, determining the answer based on the second modal information.

Optionally, determining the answer based on the second modal information comprises: carrying out paragraph splitting on the second modal information, and determining keywords for each paragraph obtained by splitting; aggregating semantically similar paragraphs among the respective paragraphs based on the keywords; carrying out statement condensation on the aggregated paragraphs through a pre-trained summary generation model to obtain summary text; and using the summary text as the answer.

Optionally, the method further comprises: in response to a plurality of the multi-modal similarity scores being greater than or equal to the preset threshold, determining the first modal information corresponding to the highest multi-modal similarity score to be the answer.

According to a second aspect of the present disclosure, a question answering apparatus is provided. The apparatus comprises: an acquisition module, a semantic matching module, a fusion module, and an answering module, wherein the acquisition module is configured to acquire a first modal feature and a second modal feature corresponding to each piece of first modal information among multi-modal information; the semantic matching module is configured to, for one piece of the first modal information, respectively carry out semantic similarity matching on the first modal feature and the user question feature and on the second modal feature and the user question feature to correspondingly obtain a first similarity vector representation and a second similarity vector representation; the fusion module is configured to carry out information fusion on the first similarity vector representation and the second similarity vector representation to obtain a multi-modal similarity score; the answering module is configured to, in response to a multi-modal similarity score being greater than or equal to a preset threshold, use corresponding first modal information as an answer to answer the question.

According to a third aspect of the present disclosure, a computer-readable storage medium storing a computer program thereon is provided. When executed by a processor, the computer program implements the method according to any one of the above-mentioned embodiments.

According to a fourth aspect of the present disclosure, an electronic device is provided, comprising: one or more processors; and a storage device for storing one or more programs. When executed by the one or more processors, the one or more programs cause the one or more processors to implement the method according to any one of the above-mentioned embodiments.

It is to be understood that the foregoing general description and the following detailed description are exemplary and explanatory only, and are not intended as a definition of the limits of the present disclosure.

## BRIEF DESCRIPTION OF THE DRAWINGS

The accompanying drawings, which are incorporated in and form part of the specification, illustrate embodiments of the present invention and together with the specification, serve to explain the principles of the present disclosure. Obviously, the drawings described below are only some embodiments of the present disclosure, and those of ordinary skill in the art can derive other drawings based on these drawings without taking inventive efforts.

FIG. 1 schematically illustrates a flowchart of a question answering method according to an embodiment of the present disclosure.

FIG. 2 schematically illustrates an entity diagram of a second modal feature extraction process in first modal information according to an embodiment of the present disclosure.

FIG. 3 schematically illustrates an image corresponding to first modal information according to an embodiment of the present disclosure.

FIG. 4 schematically illustrates a diagram of the semantic similarity matching process between the first modal feature and the user question feature according to an embodiment of the present disclosure.

FIG. 5 schematically illustrates a flowchart of the determining process of a multi-modal similarity score according to an embodiment of the present disclosure.

FIG. 6 schematically illustrates a flowchart of the processing steps of a question answering method according to an embodiment of the present disclosure.

FIG. 7 schematically illustrates a structural block diagram of a question answering apparatus according to an embodiment of the present disclosure.

FIG. 8 schematically illustrates a block diagram of an electronic device suitable for implementing embodiments of the present disclosure.

## DETAILED DESCRIPTION

Exemplary embodiments will now be described more fully with reference to the accompanying drawings. However, the exemplary embodiments can be implemented in various forms and should not be construed as being limited to the examples set forth herein. Instead, these embodiments are provided so that the present disclosure will be more comprehensive and complete, and the concept of the exemplary embodiments will be fully conveyed to those of ordinary skill in the art. The described features, structures, or characteristics can be combined in any suitable manner in one or more embodiments. In the following description, numerous specific details are provided to give a thorough understanding of the embodiments of the present disclosure. However, those of ordinary skill in the art will realize that the technical solutions of the present disclosure can be practiced with one or more specific details omitted, or by employing alternative methods, components, devices, steps, etc. In other cases, well-known technical solutions are not shown or described in detail to avoid obscuring the aspects of the present disclosure.

In addition, the accompanying drawings are only schematic illustrations of the present disclosure and are not necessarily drawn to scale. The same reference numerals in the drawings denote the same or similar parts, and thus their repeated descriptions will be omitted. Some of the block diagrams shown in the drawings are functional entities and do not necessarily correspond to physically or logically independent entities. These functional entities can be implemented in the form of software, or in one or more hardware modules or integrated circuits, or in different networks and/or processor devices and/or microcontroller devices.

The example of the present disclosure provides an exemplary system diagram illustrating application scenarios of a question answering method and apparatus, where the system comprises terminals and servers. The method of this embodiment can be applied to servers. It can be understood that the method may also be applied to terminals, or to a system including the terminal and the server, and implemented through interaction between the terminal and the server. The server can be an independent physical server, a server cluster or a distributed system composed of multiple physical servers, or a cloud server that provides basic cloud computing services such as cloud services, cloud databases, cloud computing, cloud functions, cloud storage, network services, cloud communications, middleware services, domain name services, security services, CDN (Content Delivery Network), as well as big data and artificial intelligence platforms, or a node in a blockchain.

For example, in the process of customer service, when a user sends a user question statement at a user client, the server can associate multi-modal information based on the user question statement, and acquire first modal features and second modal features corresponding to each piece of first modal information in the multi-modal information from a knowledge base; for one piece of the first modal information, respectively carry out semantic similarity matching on the first modal feature and a user question feature and on the second modal feature and the user question feature to correspondingly obtain a first similarity vector representation and a second similarity vector representation; carry out information fusion on the first similarity vector representation and the second similarity vector representation to obtain a multi-modal similarity score; in response to one of the multi-modal similarity scores being greater than or equal to a preset threshold, determine corresponding first modal information to be an answer, and send the answer to the user terminal through the customer client.

The terminal can be a smart phone, a tablet computer, a laptop computer, a desktop computer, a smart speaker, a smart watch, a vehicle-mounted device, etc., but is not limited thereto. When the question answering method provided in this embodiment is implemented through interaction between the terminal and the server, the terminal and the server can be connected directly or indirectly through a wired or wireless communication manner, which is not limited in the present disclosure.

The question answering method provided in the embodiments of the present disclosure may be executed on a server, and correspondingly, the question answering apparatus is generally disposed in the server.

Hereinafter, the question answering method disclosed in the embodiments of this specification will be introduced with reference to specific embodiments.

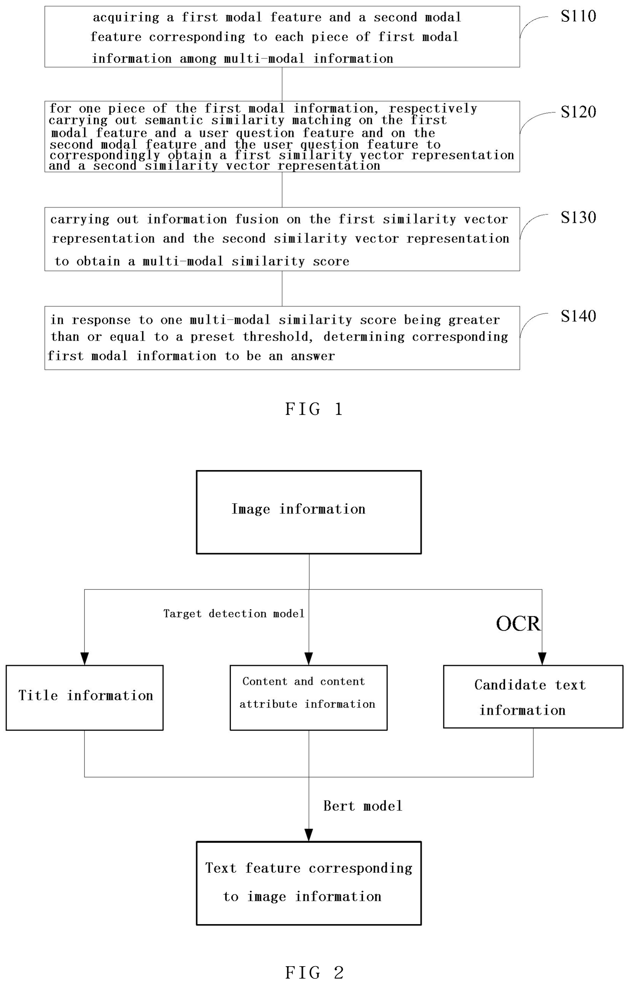

As illustrated in FIG. 1, a question answering method according to an exemplary embodiment provided by the present disclosure can be applied to various question answering systems and may include the following steps.

Step S110: Acquire a first modal feature and a second modal feature corresponding to each piece of first modal information among multi-modal information.

Step S120: For one piece of the first modal information, respectively carry out semantic similarity matching on the first modal feature and a user question feature and on the second modal feature and the user question feature to correspondingly obtain a first similarity vector representation and a second similarity vector representation.

Step S130: Carry out information fusion on the first similarity vector representation and the second similarity vector representation to obtain a multi-modal similarity score.

Step S140: In response to one multi-modal similarity score being greater than or equal to a preset threshold, determine corresponding first modal information to be an answer.

In the question answering method provided in this exemplary embodiment, on the one hand, semantic similarity matching can be performed respectively on the first modal feature and the user question feature and on the second modal feature and the user question feature. The results of these two semantic similarity matching are then fused to extract multiple modal features from a single modal information, and the answer can be determined by fusing the multiple modal features, thereby improving the accuracy of answering. On the other hand, when the multi-modal similarity score is greater than or equal to the preset threshold, the original first modal information can be used as the answer. This avoids the process of deep semantic extraction of the document content, enabling rapid response of the answering system and improving the answering efficiency. Additionally, the first modal features and the second modal features of each piece of the first modal information can be pre-extracted, further improving the answering response efficiency.

In Step S110, acquire a first modal feature and a second modal feature corresponding to each piece of first modal information among multi-modal information.

In this exemplary embodiment, multi-modal information refers to document information comprising at least two types of modal information. One type of modal refers to a source or form of information; multi-modal information may include at least two of the following: image information, audio information, text information, etc. The first modal information refers to a type of modal information that contains at least two modal features in the multi-modal information, such as image information or audio information. The first modal feature and the second modal feature are two distinct features corresponding to different modalities.

Illustratively, for a web page search scenario, all information corresponding to each web page may be considered as multi-modal information, where the image information and text information included in the web page are different modal information. One piece of the image information may be used as one piece of the first modal information, the image feature in the image information may be used as the first modal feature, and the text feature in the image information may be used as the second modal feature.

In this exemplary embodiment, pre-processing can be performed on the multi-modal information to extract a first modal feature and a second modal feature, and the first modal feature and the second modal feature can be stored in a knowledge base, so that they can be directly called during online answering, thereby reducing the response time. The first modal feature and the second modal feature can be extracted through various pre-trained models.

Illustratively, image vector information in each piece of the first modal information can be extracted through a image pre-trained model to obtain the first modal feature corresponding to each piece of the first modal information.

In this exemplary embodiment, the image pre-trained model is used to identify each piece of the first modal information (image information). The image pre-trained model may be various pre-trained convolutional neural networks, such as CNN (Convolutional Neural Network), VGG16 (Visual Geometry Group Network 16), VGG19 (Visual Geometry Group Network 19), ResNet-50 (Residual Neural Network 50), etc., which is not limited in this example. Illustratively, feature extraction may be performed through multiple convolutional layers and pooling layers of VGG16, and then an output result, i.e., the first modal feature, is obtained through multiple fully connected layers and a softmax activation function.

Illustratively, the first modal information includes image information, and the second modal feature includes a text feature. As illustrated in FIG. 2, the second modal feature corresponding to each piece of the first modal information may be acquired through the following steps:

Step 1: Extract the title information of one piece of the image information.

In this exemplary embodiment, when the image information contains a title, a label of the image information may be directly extracted. If the image information does not contain a title, an image title generation model may be used to convert image-level information into title information. The image title generation model can be an existing image title generation model or tool, such as the visual processing deep learning library LAVIS, which is an open-source library used for training and evaluating state-of-the-art language-vision models on a rich set of common tasks and datasets, and for performing out-of-the-box inference on customized language-vision data. For instance, an image is input, and a corresponding text description is output.

Step 2: Identify content of the image information and content attribute information through a pre-trained target detection model.

In this exemplary embodiment, the target detection model is used to find all target objects of interest in the image and determine the categories and locations of the objects. The target detection model can be one of R-CNN (Region Convolutional Neural Network), SPP-Net (Spatial Pyramid Pooling Net), Fast R-CNN, Faster R-CNN, R-FCN (Region-based Fully Convolutional Network), etc., which is not limited in this example. The content in the image information may include various objects (such as environment, people, items, etc.), and the content attribute information may include basic attribute information such as object name and gender, and may also include attribute information such as object occupation, object color, and object height, which is not limited in this example.

Step 3: Extract candidate text information from the image information through optical character recognition.

In this exemplary embodiment, text in the image information, i.e., text information inherently contained in the image (i.e., candidate text information), can be extracted through Optical Character Recognition (OCR) technology.

Step 4: Carry out vectorization representation on the title information, the content and the content attribute information, as well as the candidate text information to obtain the text feature corresponding to the image information.

In this exemplary embodiment, the title information, the content and the attribute information, as well as the candidate text information extracted in the above-mentioned steps can be used as the text information extracted from the image information (i.e., the second modal information extracted from the first modal information), and vectorization representation can be performed on the text feature to obtain the corresponding second modal feature. A pre-trained text vectorization model may be used for vectorization representation, such as a pre-trained Bert model.

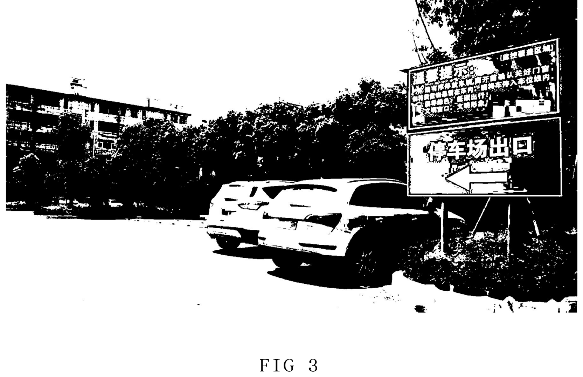

For example, as illustrated in Fig. 3, the title information extracted for this image is "Convenient Parking Lot", the extracted content and the content attribute information include "white car", "blue sign", "woods", "buildings", etc., and the extracted candidate text information is "Parking Lot Exit; Warm Reminder: This is a monitored area. Please park your vehicle in order... " The second modal feature of the image (i.e., the text feature of the image) can be obtained by performing vectorization representation (using a pre-trained Bert model) on the above extracted information.

Illustratively, the first modal feature and second modal feature extracted in the above-mentioned embodiments may be stored in two knowledge bases, respectively. The content parsing process of the above-mentioned first modal feature and second modal feature may be obtained by preprocessing the image information in the target document and stored in the knowledge bases, thereby improving the subsequent answering response speed.

The present disclosure is directed to a multi-modal document question-answering system. In some embodiments, the method further comprises: in response to receiving a user question statement, encoding the user question statement through a pre-trained encoding model to obtain the user question feature.

In this exemplary embodiment, the user question statement may be a question statement sent by a user in the question-answering system, such as a user statement received by a customer service system. Carry out vectorization representation on the received user question statement. The pre-trained encoding model may be the same vectorization representation model as that used for the second modal feature, such as a pre-trained Bert model.

In Step S120, for one piece of the first modal information, respectively carry out semantic similarity matching on the first modal feature and the user question feature and on the second modal feature and the user question feature to correspondingly obtain the first similarity vector representation and the second similarity vector representation.

In this exemplary embodiment, the first modal information may be an image, and semantic similarity matching can be performed between each image of the target document and the user question feature respectively. The first modal feature may correspond to an image feature vector, and the second feature vector may correspond to a text feature vector extracted from the image. Semantic similarity matching is performed between the two modal features and the user question feature, respectively. For example, a feature vector of the matching relationship between the image and the user question feature can be modeled based on the two feature vectors to be matched, and then another model (such as a multi-layer perceptron MLP) can be used to learn universal text relationship function mapping.

Illustratively, semantic similarity matching can be performed on the first modal feature vector and the user question feature through a multi-modal transformer model. The transformer model may include an encoder and a decoder. The encoder adopts a structure of a self-attention mechanism and a feed-forward neural network, and the decoder adopts the same structure as the encoder. The difference is that the decoder further has an attention structure between the two structures, which is used to make the decoder focus on the relevant part of the input feature, that is, the output of the self-attention mechanism of the decoder and the output of the encoder are used to calculate the attention score, and then enter the feed-forward neural network of the decoder. The encoder may include multiple encoding modules of the aforesaid structure, and the decoder may also include multiple decoding modules of the same structure. Specifically, the following steps may be included.

Semantic similarity matching is performed on the first modal feature and the user question feature through a multi-layer attention layer. Non-linear activation and linear transformation are performed on the output of the multi-layer attention layer through a feed-forward network layer to obtain the first similarity vector representation.

In this exemplary embodiment, the multi-layer attention layer is used for matching based on the self-attention mechanism. The user question feature can be mapped to Q, and the first modal feature (image vector) can be used as K and V vectors for processing based on the self-attention mechanism. The feed-forward network layer is used for performing non-linear activation and linear transformation on the output of the multi-layer attention layer, such as performing multiple linear transformations and ReLU activation function processing. The input of the encoder and the decoder also includes location information of the vectors. The output of the feed-forward neural network layer may be a context vector based on the self-attention mechanism, and the first similarity vector representation (a similarity representation vector of the two input vectors) can be obtained by performing full connection processing on said vector.

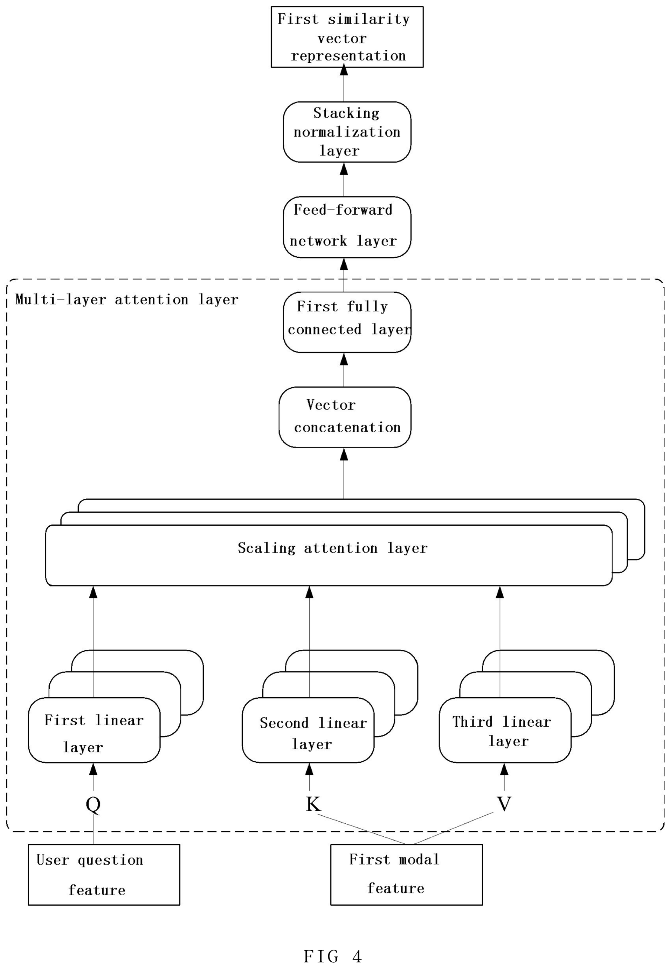

Illustratively, as illustrated in FIG. 4, semantic similarity matching can be performed on the first modal feature and the user question feature through the multi-layer attention layer.

For each attention layer, first linear processing is performed on the user question feature through a first linear layer to obtain a first intermediate vector; second linear processing and third linear processing are performed on the first modal feature through a second linear layer and a third linear layer respectively to obtain a second intermediate vector and a third intermediate vector; the similarity between the first intermediate vector and the second intermediate vector is determined; weighted matching is performed on the third intermediate vector according to the similarity to obtain the output of the current attention layer; vector concatenation is performed on the outputs of the respective attention layers, and full connection processing is performed on the concatenated vector through a first fully connected layer to obtain the output of the multi-layer attention layer.

In this exemplary embodiment, the first intermediate vector may correspond to Q (Query), the second intermediate vector may correspond to K (Key), and the third intermediate vector may correspond to V (Value). The similarity between Q and K can be determined by calculating the dot product between Q and K; a scaling attention layer can also be used to perform scaling processing on the similarity. Then, a softmax operation is used to normalize the result into probability distribution, and the probability distribution is multiplied by V as a weighting weight to perform weighted summation, so as to obtain the output of the current attention layer. The same processing is performed on each attention layer, and the model parameters of different layers may be different, so as to obtain multiple vector representations of the self-attention mechanism. Vector concatenation is performed on the outputs of the multiple attention layers, and then full connection processing is performed by using a fully connected layer (the first fully connected layer) to obtain the output of the multi-layer attention layer.

For example, the processing process of one attention layer can be expressed by the following formulas:

$$\text{Attention}(Q, K, V) = \text{softmax}\left(\frac{QK^T}{\sqrt{d}}\right)V$$

$$Q = W_q Q_i + b_q$$

$$K = W_k I_n + b_k$$

$$V = W_v I_n + b_v$$

wherein, Attention(Q,K,V) represents the output of the attention layer, softmax represents the softmax function, and Q, K, V represent the first intermediate vector, the second intermediate vector, and the third intermediate vector, respectively; d represents the dimension of the vector K, and $\sqrt{d}$ is used for scaling here to prevent the result from being too large; $W_q$ and $b_q$ represent the model parameters of the first linear processing, $W_k$ and $b_k$ represent the model parameters of the second linear processing, $W_v$, and $b_v$ represent the model parameters of the third linear processing, $Q_i$ represents the user question feature, $I_n$ represents the first modal feature, and the superscript T represents the matrix transposition operation.

In some embodiments, various existing semantic similarity matching models can be used to perform semantic similarity matching on the second modal feature and the user question feature.

Illustratively, the second modal feature and the user question feature can be concatenated to obtain a concatenated vector; the concatenated vector is mapped to a low-dimensional space through a second fully connected layer to obtain a second similarity vector representation.

In this exemplary embodiment, the second modal feature may be a text feature extracted from the image information, and the vector can be mapped to the low-dimensional space through a fully connected layer.

In Step S130, carry out information fusion on the first similarity vector representation and the second similarity vector representation to obtain a multi-modal similarity score.

In this exemplary embodiment, information fusion can be performed on the first similarity vector representation and the second similarity vector representation through a gating mechanism.

Illustratively, information fusion can be performed on the first similarity vector representation and the second similarity vector representation through a gating network; full connection processing and non-linear activation processing are performed on the fused vector to obtain the multi-modal similarity score.

In this exemplary embodiment, the gating network may be a simple gating mechanism (for example, a threshold hyperparameter g of 0.3) or a learned gating network model, which is not limited in this example.

For example, the information fusion process can be expressed as:

$$g = \delta\big(W_i V_{iq} + W_t V_{tq} + b\big)$$

$$V_m = g \circ V_{iq} + (1 - g) \circ V_{tq}$$

$$y = \text{softmax}(\text{FNN}(V_m))$$

wherein ∘ represents the dot product operation, $V_m$ represents the output of the gating network, $V_{iq}$ represents the first similarity vector representation, $V_{tq}$ represents the second similarity vector representation, $W_i$, $W_t$, and b represent the model parameters of the gating network, $\delta$ represents a normalization activation function, FNN represents full connection processing, and y represents the output multi-modal similarity score.

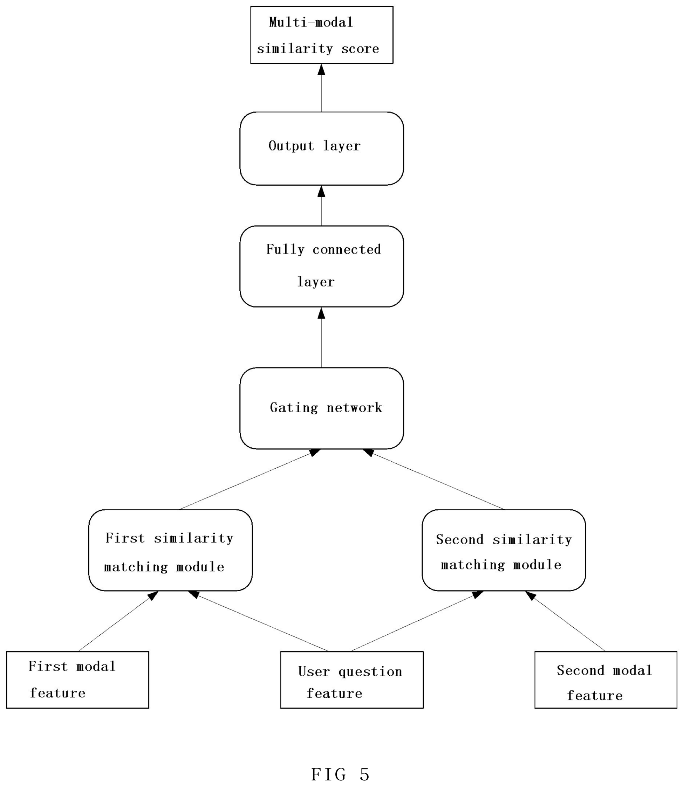

In the above-mentioned embodiment, as illustrated in FIG. 5, the process of determining the multi-modal similarity score may use a multi-modal matching model. The multi-modal matching model can be trained by using training samples in the application field based on different application fields, such as the customer service field, the web search field, etc. The model may include a first similarity matching module, a second similarity matching module, a gating network, a fully connected layer, and an output layer. The first similarity matching module is a transformer-based matching model, and the second similarity matching module may include a linear mapping layer. The user question feature and the first modal feature are input into the first similarity matching model, the user question feature and the second modal feature are input into the second similarity matching model, and the output layer outputs the multi-modal similarity score between the question and the image.

In Step S140, in response to one of the multi-modal similarity scores being greater than or equal to a preset threshold, the corresponding first modal information is used as the answer to answer the question.

In this exemplary embodiment, the preset threshold is a judgment condition for the first modal answering. This threshold can be set according to experience and actual conditions (for example, it can be set to 0.9), and can also be adjusted according to different conditions, which is not limited in this example. When the multi-modal similarity score between an image and the user question is greater than or equal to the threshold, the first modal information (i.e., the image) can be preferentially used as the answer to increase the information richness and diversity of the answer. For example, when the user question statement is "the appearance of the object xx" or the like, answering with the first modal information (information containing images) can provide the user with a more intuitive answer and improve user satisfaction.

Illustratively, when there are multiple multi-modal similarity scores greater than or equal to the preset threshold, the first modal information corresponding to the highest multi-modal similarity score is determined to be the answer. For example, if the multi-modal similarity scores of multiple images and the user question meet the matching condition (greater than or equal to the preset threshold), the image with the highest similarity score can be used as the answer to answer the question.

In some embodiments, the multi-modal information includes the second modal information, and the method further includes: in response to each of the multi-modal similarity scores being less than the preset threshold, determining the answer based on the second modal information.

In this exemplary embodiment, the second modal information may be text-type information. When the image matching threshold is not reached, matching and answering can be performed based on the text-type information.

Illustratively, paragraph splitting can be performed on the second modal information, and keywords of each paragraph obtained by splitting can be determined; semantically similar paragraphs among the respective paragraphs can be aggregated based on the keywords; statement condensation can be performed on the aggregated paragraphs through the pre-trained summary generation model to obtain summary text; and the summary text can be used as the answer.

In this exemplary embodiment, the second modal information refers to document information in the multi-modal information except the first modal information. For example, for a document containing text and images, the second modal information may be text information except the images. A paragraph splitting tool may be used for paragraph splitting, and an existing keyword extraction algorithm can be used for keyword extraction, such as TF-IDF (Term-Frequency Inverse Document Frequency) algorithm, TextRank algorithm, or a combination algorithm thereof. The keywords may also be the titles of the respective paragraphs. When consecutive paragraphs/titles share a specified number of keywords, the corresponding paragraphs are aggregated into a large paragraph, so that the same paragraph describes the same content. A pre-trained summary generation model (such as a CNN-based Sequence-to-Sequence model, a Long Short-Term Memory (LSTM)-based Sequence-to-Sequence model, or an attention mechanism-based Sequence-to-Sequence model) can be used to condense the text of each aggregated long paragraph into a semantically condensed short sentence. For example, a long paragraph of 100 sentences can be condensed into 10 sentences, and the sentences can also be paraphrased, which is not limited in this example.

In the method of the present disclosure, the process of extracting the first modal feature and the second modal feature of the first modal information of the multi-modal information and the process of processing the second modal information may be completed in advance, and the extracted/processed results can be stored in the corresponding knowledge bases. The online question-answering system can obtain the corresponding information from the knowledge bases for answer response.

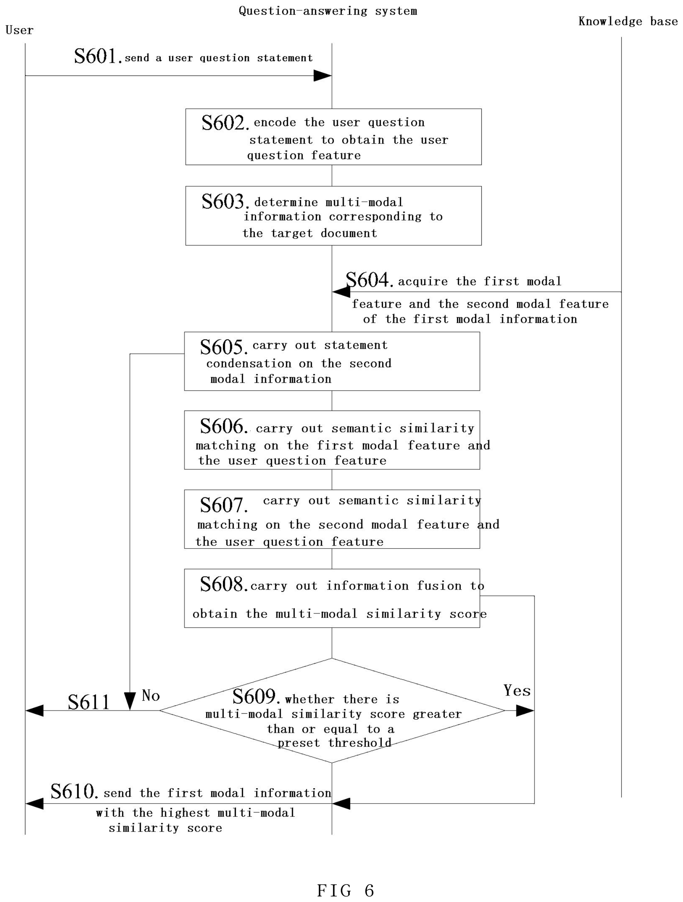

For example, the implementation process of the question answering method of the present disclosure is as illustrated in FIG. 6, which can be specifically implemented through the following steps:

Step S601: A user sends a user question statement to the question-answering system.

Step S602: The question-answering system encodes the user question statement through the pre-trained encoding model to obtain the user question feature.

Step S603: The question-answering system determines multi-modal information corresponding to the target document based on the received user question statement.

In this example, relevant document content can be associated with the user question statement as the target document. If the target document has multi-modal information, the process proceeds to S604. If the target document has multi-modal information, statement condensation can be performed on the target document and an answer can be given.

Step S604: The question-answering system respectively acquires the first modal feature and the second modal feature corresponding to each of the first modal information in the multi-modal information from the knowledge base.

Step S605: Carry out statement condensation on the second modal information in the multi-modal information through the pre-trained summary generation model to obtain summary text.

Step S606: The question-answering system performs semantic similarity matching on the first modal feature and the user question feature through the first similarity matching model for one piece of the first modal information.

In this example, the first similarity matching model is a transformer model. In the transformer model, the user question feature is mapped to Q, and the first modal feature is used as K and V information.

Step S607: The question-answering system performs semantic similarity matching on the second modal feature and the user question feature through the second similarity matching model.

In this example, the second similarity matching model is a fully connected network.

Step S608: The question-answering system performs information fusion on the first similarity vector representation and the second similarity vector representation through the gating network to obtain the multi-modal similarity score.

Step S609: The question-answering system judges whether there is at least one multi-modal similarity score greater than or equal to a preset threshold. If yes, the process proceeds to S610; otherwise, the process proceeds to Step S611.

Step S610: The question-answering system sends the first modal information with the highest multi-modal similarity score to the user as the answer.

Step S611: The question-answering system sends the summary text in Step S605 to the user as the answer.

In the question-answering process of the above embodiments, models related to semantic similarity matching, such as the first similarity matching model, the second similarity matching model, and the gating network, need to be trained, and other models may be directly used using pre-trained models.

In view of the fact that most documents in practical applications contain multi-modal information expressions of coexistence of text content, image content, audio content, etc., the present disclosure on the one hand proposes a document content parsing method based on multimodality, which extracts multi-faceted text information from the first modal information containing image content, fuses the visual information and text information in the image to improve the image matching accuracy. At the same time, based on the current situation that document content is uploaded in advance, preparsing can be performed on the multi-modal information in the document to improve the system response speed during the question-answering process. On the other hand, through semantic matching of the image content in two dimensions, i.e., semantic similarity matching between the first modal feature and the user question feature and between the second modal feature and the user question feature, the matching accuracy is improved, thereby improving the accuracy of answering. In addition, when the similarity score of the image content is relatively high, the image is directly used for answering, which can improve answering efficiency and answering effect, and enhance user experience.

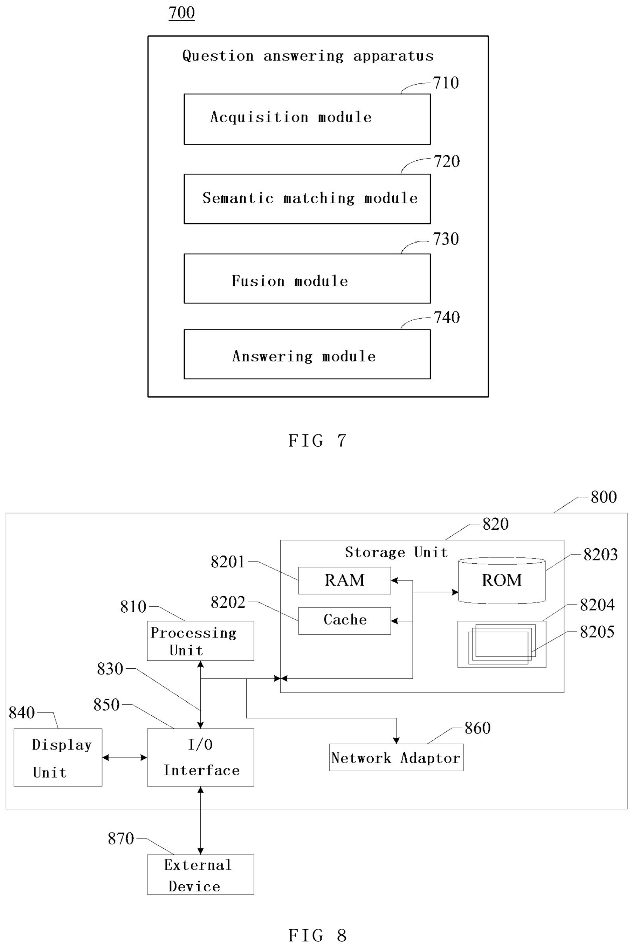

Further, in this exemplary embodiment, a question answering apparatus 700 is also provided. The question answering apparatus 700 can be applied to a server. With reference to FIG. 7, the question answering apparatus 700 may include: an acquisition module 710, a semantic matching module 720, a fusion module 730, and a determination module 740. The acquisition module 710 is configured to acquire a first modal feature and a second modal feature corresponding to each of first modal information in the multi-modal information; the semantic matching module 720 is configured to, for one piece of the first modal information, respectively carry out semantic similarity matching on the first modal feature and the user question feature and on the second modal feature and the user question feature to correspondingly obtain the first similarity vector representation and the second similarity vector representation; the fusion module 730 is configured to perform information fusion on the first similarity vector representation and the second similarity vector representation to obtain the multi-modal similarity score; the determination module 740 is configured to, in response to one of the multi-modal similarity scores being greater than or equal to a preset threshold, use corresponding first modal information as the answer to answer the question.

In an exemplary embodiment of the present disclosure, the semantic matching module 720 includes a first matching sub-module configured to: carry out semantic similarity matching on the first modal feature and the user question feature through the multi-layer attention layer; carry out non-linear activation and linear transformation on the output of the multi-layer attention layer through the feed-forward network layer to obtain the first similarity vector representation.

In an exemplary embodiment of the present disclosure, the first matching sub-module is further configured to: for each attention layer, carry out first linear processing on the user question feature to obtain the first intermediate vector; carry out second linear processing and third linear processing on the first modal feature respectively to obtain the second intermediate vector and the third intermediate vector; determine the similarity between the first intermediate vector and the second intermediate vector; carry out weighted matching on the third intermediate vector according to the similarity to obtain the output of the current attention layer; carry out vector concatenation on the output of the respective attention layers, and carry out full connection processing on a concatenated vector through the first fully connected layer to obtain the output of the multi-layer attention layer.

In an exemplary embodiment of the present disclosure, the semantic matching module 720 further includes a second matching sub-module configured to: concatenate the second modal feature and the user question feature to obtain the concatenated vector; map the concatenated vector to the low-dimensional space through the second fully connected layer to obtain the second similarity vector representation.

In an exemplary embodiment of the present disclosure, the fusion module 730 is further configured to: carry out information fusion on the first similarity vector representation and the second similarity vector representation through the gating network; carry out full connection processing and non-linear activation processing on a fused vector to obtain the multi-modal similarity score.

In an exemplary embodiment of the present disclosure, the first modal information includes image information and the second modal feature includes a text feature. The acquisition module 710 includes a first extraction sub-module configured to: extract title information of one piece of image information; identify content and content attribute information of the image information through the pre-trained target detection model; extract candidate text information from the image information through optical character recognition; carry out vectorization representation on the title information, the content and the content attribute information, as well as the candidate text information to obtain the text feature corresponding to the image information.

In an exemplary embodiment of the present disclosure, the acquisition module 710 further includes a second extraction sub-module configured to: extract image vector information from each of the first modal information through the image pre-trained model to obtain the corresponding first modal feature.

In an exemplary embodiment of the present disclosure, the apparatus 700 further includes an encoding module configured to, in response to receiving a user question statement, encode the user question statement through the pre-trained encoding model to obtain the user question feature.

In an exemplary embodiment of the present disclosure, the multi-modal information includes second modal information, and the answering module 740 is further configured to: in response to each of the multi-modal similarity scores being less than the preset threshold, determine the answer based on the second modal information.

In an exemplary embodiment of the present disclosure, the answering module 740 is further configured to: carry out paragraph splitting on the second modal information, and determine keywords of each paragraph obtained by splitting; aggregate semantically similar paragraphs among the respective paragraphs based on the keywords; carry out statement condensation on the aggregated paragraphs through the pre-trained summary generation model to obtain summary text; and use the summary text as the answer.

In an exemplary embodiment of the present disclosure, the answering module 740 is further configured to: in response to a plurality of multi-modal similarity scores being greater than or equal to the preset threshold, determine the first modal information corresponding to the highest multi-modal similarity score as the answer.

The specific details of each module or unit in the above-mentioned question answering apparatus have been described in detail in the corresponding question answering method, so they will not be repeated here.

As another aspect, the present application also provides a computer-readable medium, which may be included in the electronic device described in the aforesaid embodiments; or may exist independently without being assembled into the electronic device. The above computer-readable medium carries one or more programs, and when the one or more programs are executed by one of said electronic device, this electronic device implements the method as described in the following embodiments. For example, the electronic device may implement the respective steps as illustrated in FIGs. 1 and 2, and FIGs. 4-6.

It should be noted that the computer-readable medium shown in the present disclosure may be a computer-readable signal medium or a computer-readable storage medium, or any combination of the two. The computer-readable storage medium may be, for example, but not limited to, an electrical, magnetic, optical, electromagnetic, infrared, or semiconductor system, apparatus, or device, or any combination thereof. More specific examples of the computer-readable storage medium may include, but are not limited to: an electrical connection with one or more wires, a portable computer disk, a hard disk, a Random Access Memory (RAM), a Read-Only Memory (ROM), an Erasable Programmable Read-Only Memory (EPROM or Flash memory), an optical fiber, a portable Compact Disc Read-Only Memory (CD-ROM), an optical storage device, a magnetic storage device, or any suitable combination thereof. In the present disclosure, the computer-readable storage medium may be any tangible medium that contains or stores a program, and the program may be used by or in combination with an instruction execution system, apparatus, or device. In the present disclosure, the computer-readable signal medium may include a data signal propagated in a baseband or as part of a carrier wave, and computer-readable program code is carried therein. Such a propagated data signal may take various forms, including but not limited to an electromagnetic signal, an optical signal, or any suitable combination thereof. The computer-readable signal medium may also be any computer-readable medium other than the computer-readable storage medium, and the computer-readable medium may send, propagate, or transmit a program for use by or in combination with an instruction execution system, apparatus, or device. The program code contained on the computer-readable medium may be transmitted by any suitable medium, including but not limited to: wireless, wire, optical cable, Radio Frequency (RF), etc., or any suitable combination thereof.

Hereinafter, an electronic device 800 according to such an embodiment of the present disclosure will be described with reference to FIG. 8. The electronic device 800 illustrated in FIG. 8 is only an example and should not impose any limitation on the function and scope of use of the embodiments of the present disclosure.

As illustrated in FIG. 8, the electronic device 800 is implemented as a general-purpose computing device. The components of the electronic device 800 may include but are not limited to: the above-mentioned at least one processing unit 810, the above-mentioned at least one storage unit 820, a bus 830 connecting different system components (including the storage unit 820 and the processing unit 810), and a display unit 840.

Wherein, the storage unit stores program codes, and the program codes can be executed by the processing unit 810, so that the processing unit 810 executes the steps described in the above "Exemplary Method" of this specification according to various exemplary embodiments of the present disclosure.

The storage unit 820 may include a readable medium in the form of a volatile storage unit, such as a RAM 8201 and/or a cache storage unit 8202, and may further include a ROM 8203.

The storage unit 820 may also include a program/utility tool 8204 having a set (at least one) of program modules 8205. Such program modules 8205 include but are not limited to: an operating system, one or more applications, other program modules, and program data. Each or some combination of these examples may include implementation of network environment.

The bus 830 may represent one or more of several types of bus structures, including a storage unit bus or a storage unit controller, a peripheral bus, an accelerated graphics port, a processing unit, or a local bus using any of a variety of bus structures.

The electronic device 800 may also communicate with one or more external devices 870 (such as a keyboard, a pointing device, a Bluetooth device, etc.), and may also communicate with one or more devices that enable a user to interact with the electronic device 800, and/or communicate with any device (such as a router, a modem, etc.) that enables the electronic device 800 to communicate with one or more other computing devices. Such communication may be performed through an Input/Output (I/O) interface 850. Moreover, the electronic device 800 may also communicate with one or more networks (such as a Local Area Network (LAN), a Wide Area Network (WAN), and/or a public network such as the Internet) through a network adapter 860. As shown in the figures, the network adapter 860 communicates with other modules of the electronic device 800 through the bus 830. It should be understood that although not shown in the figure, other hardware and/or software modules may be used in combination with the electronic device 800, including but not limited to: microcode, device drivers, redundant processing units, external disk drive arrays, RAID systems, tape drives, and data backup storage systems.

Through the description of the above-mentioned embodiments, those of ordinary skill in the art can easily understand that the exemplary embodiments described here can be implemented by software, or by software in combination with necessary hardware. Therefore, according to the technical solutions of the embodiments of the present disclosure, it can be embodied in the form of a software product, which can be stored in a non-volatile storage medium (which can be a CD-ROM, a USB flash drive, a mobile hard disk, etc.) or on a network, and includes several instructions to make a computing device (which can be a personal computer, a server, a terminal device, a network device, etc.) execute the method according to the embodiments of the present disclosure.

In addition, the accompanying drawings are only schematic illustrations of the processes involved in the methods according to the exemplary embodiments of the present disclosure and are not intended to be limiting. It is readily understood that the processes shown in the accompanying drawings do not indicate or constrain the temporal order of these processes. Furthermore, it is also readily understood that these processes may be executed, for example, synchronously or asynchronously in multiple modules.

It should be noted that although the steps of the methods in the present disclosure are described in a specific order in the accompanying drawings, this does not require or imply that these steps must be executed in this specific order, or that all steps shown must be executed to achieve the desired results. Additionally or alternatively, some steps may be omitted, multiple steps may be combined into one step for execution, and/or one step may be decomposed into multiple steps for execution, etc., all of which should be considered as part of the present disclosure.

It should be understood that the disclosure as claimed and defined in this specification extends to all alternative combinations of two or more distinct features mentioned and/or evident from the text and/or drawings. All these different combinations constitute multiple alternative aspects of the present disclosure. The embodiments described in the present specification illustrate the best mode known for carrying out the present disclosure and will enable those of ordinary skill in the art to utilize the present disclosure.

**Claims**

1. A question answering method, comprising:

    acquiring a first modal feature and a second modal feature corresponding to each piece of first modal information among multi-modal information;
    for one piece of the first modal information, respectively carrying out semantic similarity matching on the first modal feature and a user question feature and on the second modal feature and the user question feature to correspondingly obtain a first similarity vector representation and a second similarity vector representation;
    carrying out information fusion on the first similarity vector representation and the second similarity vector representation to obtain a multi-modal similarity score; and
    in response to one of the multi-modal similarity scores being greater than or equal to a preset threshold, determining corresponding first modal information to be an answer to answer the question.

2. The question answering method according to claim 1, wherein the carrying out semantic similarity matching on the first modal feature and the user question feature comprises:

    carrying out semantic similarity matching on the first modal feature and the user question feature through a multi-layer attention layer; and
    carrying out non-linear activation and linear transformation on an output of the multi-layer attention layer through a feed-forward network layer to obtain the first similarity vector representation.

3. The question answering method according to claim 2, wherein the carrying out semantic similarity matching on the first modal feature and the user question feature through the multi-layer attention layer comprises:

    for each attention layer, carrying out first linear processing on the user question feature to obtain a first intermediate vector;
    carrying out second linear processing and third linear processing on the first modal feature respectively to obtain a second intermediate vector and a third intermediate vector;
    determining a similarity between the first intermediate vector and the second intermediate vector;
    carrying out weighted matching on the third intermediate vector according to the similarity to obtain an output of a current attention layer;
    carrying out vector concatenation on outputs of respective attention layers, and
    carrying out full connection processing on a concatenated vector through a first fully connected layer to obtain the output of the multi-layer attention layer.

4. The question answering method according to claim 1, wherein the carrying out semantic similarity matching on the second modal feature and the user question feature comprises:

    concatenating the second modal feature and the user question feature to obtain a concatenated vector; and
    mapping the concatenated vector to a low-dimensional space through a second fully connected layer to obtain the second similarity vector representation.

5. The question answering method according to claim 1, wherein the carrying out information fusion on the first similarity vector representation and the second similarity vector representation comprises:

    carrying out information fusion on the first similarity vector representation and the second similarity vector representation through a gating network; and
    carrying out full connection processing and non-linear activation processing on a fused vector to obtain the multi-modal similarity score.

6. The question answering method according to claim 1, wherein the first modal information comprises image information, the second modal feature comprises a text feature, and the acquiring the second modal feature corresponding to each piece of the first modal information comprises:

extracting title information of one piece of the image information;

identifying content in the image information and content attribute information through a pre-trained target detection model;

extracting candidate text information in the image information through optical character recognition; and

carrying out vectorization representation on the title information, the content and the content attribute information, as well as the candidate text information to obtain the text feature corresponding to the image information.

7. The question answering method according to claim 1, wherein the acquiring the first modal feature corresponding to each of the first modal information comprises:

extracting image vector information in each of the first modal information through a image pre-trained model to obtain the corresponding first modal feature.

8. The question answering method according to claim 6, further comprising:

in response to receiving a user question statement, encoding the user question statement through a pre-trained encoding model to obtain the user question feature.

9. The question answering method according to any one of claims 1 to 8, wherein the multi-modal information comprises second modal information, and the method further comprises:

in response to each of the multi-modal similarity scores being less than a preset threshold, determining the answer based on the second modal information.

10. The question answering method according to claim 9, wherein the determining the answer based on the second modal information comprises:

carrying out paragraph splitting on the second modal information, and determining keywords of each paragraph obtained by splitting;

aggregating semantically similar paragraphs among the respective paragraphs based on the keywords;

carrying out statement condensation on the aggregated paragraphs through a pre-trained summary generation model to obtain summary text; and

using the summary text as the answer.

11. The question answering method according to claim 1, further comprising:

in response to a plurality of the multi-modal similarity scores being greater than or equal to the preset threshold, determining the first modal information corresponding to a highest multi-modal similarity score to be the answer.

12. A question answering apparatus, comprising:

an acquisition module configured to acquire a first modal feature and a second modal feature corresponding to each piece of first modal information among multi-modal information;

a semantic matching module configured to, for one piece of the first modal information, respectively carry out semantic similarity matching on the first modal feature and a user question feature and on the second modal feature and the user question feature to correspondingly obtain a first similarity vector representation and a second similarity vector representation;

a fusion module configured to carry out information fusion on the first similarity vector representation and the second similarity vector representation to obtain a multi-modal similarity score; and

an answering module configured to, in response to one of the multi-modal similarity scores being greater than or equal to a preset threshold, use corresponding first modal information as an answer to answer the question.

13. An electronic device, comprising:

one or more processors; and

a storage device, on which one or more programs are stored,

the one or more programs, when executed by the one or more processors, cause the one or more processors to implement the method according to any one of claims 1 to 11.

14. A computer-readable storage medium storing a computer program thereon, wherein the computer program, when executed by a processor, implements the method according to any one of claims 1 to 11.

acquiring a first modal feature and a second modal feature corresponding to each piece of first modal information among multi-modal information ⌒ S110

for one piece of the first modal information, respectively carrying out semantic similarity matching on the first modal feature and a user question feature and on the second modal feature and the user question feature to correspondingly obtain a first similarity vector representation and a second similarity vector representation ⌒ S120

carrying out information fusion on the first similarity vector representation and the second similarity vector representation to obtain a multi-modal similarity score ⌒ S130

in response to one multi-modal similarity score being greater than or equal to a preset threshold, determining corresponding first modal information to be an answer ⌒ S140

FIG 1

Image information

Target detection model                    OCR

Title information

Content and content attribute information

Candidate text information

Bert model

Text feature corresponding to image information

FIG 2

FIG 3

First similarity vector representation

Stacking normalization layer

Feed-forward network layer

**Multi-layer attention layer**

First fully connected layer

Vector concatenation

Scaling attention layer

First linear layer

Second linear layer

Third linear layer

Q

K

V

User question feature

First modal feature

FIG 4

Multi-modal
similarity score

Output layer

Fully connected
layer

Gating network

First similarity
matching module

Second similarity
matching module

First modal
feature

User question
feature

Second modal
feature

FIG 5

Question-answering system

User

Knowledge base

S601. send a user question statement

S602. encode the user question statement to obtain the user question feature

S603. determine multi-modal information corresponding to the target document

S604. acquire the first modal feature and the second modal feature of the first modal information

S605. carry out statement condensation on the second modal information

S606. carry out semantic similarity matching on the first modal feature and the user question feature

S607. carry out semantic similarity matching on the second modal feature and the user question feature

S608. carry out information fusion to obtain the multi-modal similarity score

S611    No

S609. whether there is multi-modal similarity score greater than or equal to a preset threshold

Yes

S610. send the first modal information with the highest multi-modal similarity score

FIG 6

700

Question answering apparatus

Acquisition module — 710

Semantic matching module — 720

Fusion module — 730

Answering module — 740

FIG 7

800

Storage Unit — 820

8201 — RAM

ROM — 8203

8202 — Cache

8204
8205

810 — Processing Unit

830

840 — Display Unit

850 — I/O Interface

860 — Network Adaptor

870 — External Device

FIG 8

## INTERNATIONAL SEARCH REPORT

| International application No. |
|---|
| **PCT/CN2024/109259** |

| A. | CLASSIFICATION OF SUBJECT MATTER |
|---|---|

G06F16/332(2019.01)i; G06N3/08(2023.01)i

According to International Patent Classification (IPC) or to both national classification and IPC

| B. | FIELDS SEARCHED |
|---|---|

Minimum documentation searched (classification system followed by classification symbols)

G06F16/-; G06N3/-

Documentation searched other than minimum documentation to the extent that such documents are included in the fields searched

Electronic data base consulted during the international search (name of data base and, where practicable, search terms used)

CNTXT, ENTXTC, VEN, IEEE, EI: 多模态, 跨模态, 回答, 应答, 匹配, 检索, 融合, 视频, 特征, 图片, 文本, 问答, 问题, 相似度, 语义, 向量, 阈值, 分数, 百度, 腾讯, 华为, IBM, OPENAI, GOOGLE, multi?modal, arcoss, modal+, match, retrieval, QA, answer, question, response, fus+, vector?, semantic, similarity, image, text, vedio, modal feature, question feature, threshold, score

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 117093687 A (JINGDONG TECHNOLOGY INFORMATION TECHNOLOGY CO., LTD.) 21 November 2023 (2023-11-21) <br> claims 1-14 | 1-14 |
| A | CN 115392389 A (BEIJING BAIDU NETCOM SCIENCE AND TECHNOLOGY CO., LTD.) 25 November 2022 (2022-11-25) <br> description, paragraphs [0025]-[0026] | 1-14 |
| A | CN 113656668 A (BEIJING BAIDU NETCOM SCIENCE AND TECHNOLOGY CO., LTD.) 16 November 2021 (2021-11-16) <br> entire document | 1-14 |
| A | CN 112527962 A (CLOUDWALK TECHNOLOGY CO., LTD.) 19 March 2021 (2021-03-19) <br> entire document | 1-14 |
| A | CN 114388064 A (SHENZHEN INSTITUTES OF ADVANCED TECHNOLOGY) 22 April 2022 (2022-04-22) <br> entire document | 1-14 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 September 2024** | **28 September 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/109259** |

**C.     DOCUMENTS CONSIDERED TO BE RELEVANT**

| Category* | Citation of document, with indication, where appropriate, of the relevant passages | Relevant to claim No. |
| --- | --- | --- |
| A | US 2021150315 A1 (INTERNATIONAL BUSINESS MACHINES CORP.) 20 May 2021 (2021-05-20)<br>entire document | 1-14 |
| A | XIE. Liang et al. "A Semantic Model for Cross-Modal and Multi-Modal Retrieval" *ICMR '13*, 16 April 2013 (2013-04-16), 175-182<br>entire document | 1-14 |

Form PCT/ISA/210 (second sheet) (July 2022)

**INTERNATIONAL SEARCH REPORT**
Information on patent family members

International application No.

**PCT/CN2024/109259**

| Patent document cited in search report | | | Publication date (day/month/year) | Patent family member(s) | | | Publication date (day/month/year) |
|---|---|---|---|---|---|---|---|
| CN | 117093687 | A | 21 November 2023 | None | | | |
| CN | 115392389 | A | 25 November 2022 | CN | 115392389 | B | 29 August 2023 |
| CN | 113656668 | A | 16 November 2021 | CN | 113656668 | B | 11 October 2022 |
| | | | | WO | 2023019948 | A1 | 23 February 2023 |
| CN | 112527962 | A | 19 March 2021 | None | | | |
| CN | 114388064 | A | 22 April 2022 | WO | 2023109714 | A1 | 22 June 2023 |
| US | 2021150315 | A1 | 20 May 2021 | JP | 2023501469 | A | 18 January 2023 |
| | | | | AU | 2020385264 | A1 | 28 April 2022 |
| | | | | AU | 2020385264 | B2 | 14 December 2023 |
| | | | | WO | 2021094920 | A1 | 20 May 2021 |
| | | | | US | 11915123 | B2 | 27 February 2024 |
| | | | | GB | 202208680 | D0 | 27 July 2022 |
| | | | | GB | 2604552 | A | 07 September 2022 |
| | | | | CN | 114730383 | A | 08 July 2022 |

Form PCT/ISA/210 (patent family annex) (July 2022)

**EP 4 708 073 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310975117